# EUROPEAN PATENT APPLICATION

(11) **EP 4 063 623 A1**
(43) Date of publication of application: **28.09.2022**
(21) Application number: 20891287.3
(22) Date of filing: 29.07.2020
(51) Int. Cl.: F01N 3/08, B01D 53/94, F01N 3/36

(54) **HYDROLYSIS SYSTEM, DENITRATION EQUIPMENT AND CONTROL METHOD OF HYDROLYSIS SYSTEM**

(30) Priority: 19.11.2019 JP 2019208834
(71) Applicant: Hitachi Zosen Corporation, Osaka-shi, Osaka 559-8559 (JP)
(72) Inventor: MORI, Takuma, Osaka-shi, Osaka 559-8559 (JP); TANAKA, Hironaka, Osaka-shi, Osaka 559-8559 (JP); SHONO, Emi, Osaka-shi, Osaka 559-8559 (JP)
(74) Representative: Grünecker Patent- und Rechtsanwälte PartG mbB
(86) International application number: PCT/JP2020/028999
(87) International publication number: WO 2021/100250

(57) **Abstract**

A desired amount of ammonia is supplied to a NOx removal catalyst. A hydrolysis system (10) includes: a hydrolysis reaction vessel (400) in which urea water is sprayed to a gas stream to generate ammonia; a first fan (400) that supplies the gas stream to the hydrolysis reaction vessel; and a control device (600) that controls the first fan so as to change, in accordance with an amount of the urea water supplied to the hydrolysis reaction vessel, a supplied amount of the gas stream.

## Description

### Technical Field

The present invention relates to a hydrolysis system, denitration equipment (NOx removal system), and a control method of the hydrolysis system (i.e., a method for controlling the hydrolysis system).

### Background Art

There has been known a NOx removal system used in ships and the like to reduce a nitrogen oxide (NOx) in an exhaust gas from an engine. Such a NOx removal system supplies, together with the exhaust gas, ammonia to a NOx removal catalyst, such as a selective catalytic reduction (SCR) catalyst, so as to cause a reduction reaction of a nitrogen oxide, thereby purifying the exhaust gas. Typically, in order to supply ammonia, a vessel for hydrolysis reaction (hydrolysis reaction vessel; carburetor) carries out hydrolysis of urea water, which is easy to handle, in a high-temperature gas stream to generate ammonia.

### Citation List

### Patent Literatures

### Patent Literature 1

Japanese Patent Application Publication, Tokukai, No. 2017-217982

### Summary of Invention

### Technical Problem

If a supplied amount of urea water becomes excessive relative to a flow rate of the high-temperature gas stream in the hydrolysis reaction vessel, the temperature inside the hydrolysis reaction vessel drops. Then, the urea water sprayed is hydrolyzed insufficiently, and accordingly a desired amount of ammonia cannot be supplied to a NOx removal catalyst. If this occurs, an exhaust gas cannot be appropriately purified with the NOx removal catalyst.

An aspect of the present invention has an object to provide a hydrolysis system that can supply a desired amount of ammonia to a NOx removal catalyst.

### Solution to Problem

In order to attain the above object, a hydrolysis system in accordance with an aspect of the present invention includes: a hydrolysis reaction vessel in which urea water is sprayed to a gas stream to generate ammonia; a first fan that supplies the gas stream to the hydrolysis reaction vessel; and a control device that controls the first fan so as to change, in accordance with an amount of the urea water supplied to the hydrolysis reaction vessel, a supplied amount of the gas stream.

In order to attain the above object, a method in accordance with an aspect of the present invention for controlling a hydrolysis system is a method for controlling a hydrolysis system which includes (i) a hydrolysis reaction vessel in which urea water is sprayed to a gas stream to generate ammonia and (ii) a first fan that supplies the gas stream to the hydrolysis reaction vessel, the method including: controlling the first fan so as to change, in accordance with an amount of the urea water supplied to the hydrolysis reaction vessel, a supplied amount of the gas stream.

### Advantageous Effects of Invention

In accordance with either of the above aspects of the present invention, it is possible to provide a hydrolysis system that can supply a desired amount of ammonia to a NOx removal catalyst.

### Brief Description of Drawings

Fig. 1 is a view schematically illustrating a configuration of a NOx removal system including a hydrolysis system in accordance with Embodiment 1 of the present invention.
Fig. 2 is a block diagram illustrating a control device of the hydrolysis system in accordance with Embodiment 1 of the present invention.
Fig. 3 is a block diagram illustrating a control device of a hydrolysis system in accordance with a variation of the present invention.
Fig. 4 is a view schematically illustrating a configuration of a NOx removal system including a hydrolysis system in accordance with Embodiment 2 of the present invention.

### Description of Embodiments

### Embodiment 1

The following description will discuss, with reference to the drawings, an embodiment of the present invention. Shapes and sizes (e.g., lengths, widths, and heights) of configurations illustrated in the accompanying drawings do not always reflect shapes and sizes of the actual configurations, and may sometimes be changed appropriately for the purpose of clarification and simplification of the drawings.

### <Outline of NOx removal system>

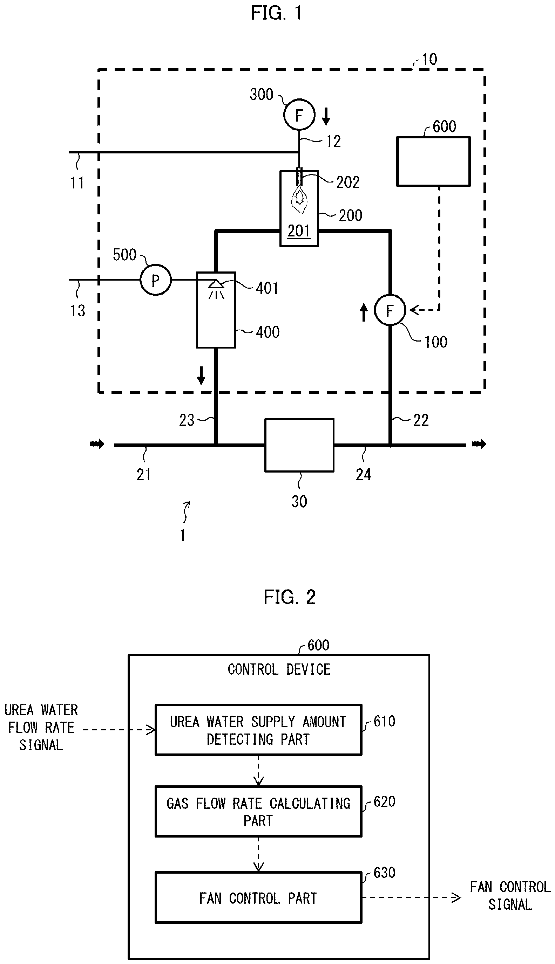

Fig. 1 is a view schematically illustrating a configuration of a NOx removal system 1 including a hydrolysis system 10 in accordance with Embodiment 1. The NOx removal system 1 carries out, with a NOx removal catalyst 30, a NOx removal treatment on an exhaust gas from an engine, such as a diesel engine, and then discharges the exhaust gas. The NOx removal catalyst 30 is connected to an exhaust gas line 21 through which an exhaust gas from the engine is introduced. The NOx removal catalyst 30 is also connected to a discharge line 24 through which the gas having been subjected to the NOx removal treatment is discharged.

### <Configuration of hydrolysis system

The hydrolysis system 10 in accordance with Embodiment 1 is a device that supplies a processed gas containing ammonia to the NOx removal catalyst. The hydrolysis system 10 includes a first fan 100, a burner unit 200, a second fan 300, a hydrolysis reaction vessel 400, a pump 500, and a control device 600.

The first fan 100 takes an extraction gas from the discharge line 24, through which the gas having been subjected to the NOx removal treatment by the NOx removal catalyst 30 is discharged, so that the extraction gas is introduced into the hydrolysis system 10. As shown in Fig. 1, in Embodiment 1, a gas extraction line 22 is branched off from the discharge line 24.

The burner unit 200 is a device that heats the extraction gas taken by the first fan 100. The burner unit 200 includes a combustion chamber 201 and a burner 202. The burner 202 is connected to a fuel line 11. A fuel to be supplied to the burner 202 via the fuel line 11 can be any of Bunker A heavy oil, Bunker B heavy oil, Bunker C heavy oil, light oil, a gas fuel made of a hydrocarbon gas, and other fuels.

The combustion chamber 201 is supplied with, through an external air line 12, air taken by the second fan 300, and burns a fuel with the burner 202. In a specific example, the combustion chamber 201 has a tubular shape elongated in its axial direction, more preferably a cylindrical shape, and has an end provided with the burner 202.

In order to heat a gas stream to a high temperature that is required to cause a hydrolysis reaction of urea water in the hydrolysis reaction vessel 400, the burner unit 200 refers to the flow rate and temperature of the gas to be supplied to the hydrolysis reaction vessel 400, and controls the combustion as appropriate. While the combustion chamber 201 is working, control is typically carried out so that the extraction gas is greater in proportion than the external air. The extraction gas heated by the combustion chamber 201 is introduced into the hydrolysis reaction vessel 400.

The hydrolysis reaction vessel 400 is a device that hydrolyzes urea water to generate ammonia. The hydrolysis reaction vessel 400 is provided with a nozzle 401. By the pump 500, the nozzle 401 is supplied with, through a supply line 13, urea water whose flow rate is controlled. The nozzle 401 sprays the urea water to a high-temperature gas stream introduced into the hydrolysis reaction vessel 400. Then, the urea water thus sprayed is hydrolyzed at a high temperature. Consequently, ammonia is generated, and is then mixed with the exhaust gas through a processed gas line 23.

In a specific example, the hydrolysis reaction vessel 400 has a tubular shape elongated in its axial direction or a polygonal tubular shape whose radial cross-section shaped in a square. However, the shape of the hydrolysis reaction vessel 400 is not limited to the polygonal tube. Alternatively, the hydrolysis reaction vessel 400 may have a cylindrical shape. The hydrolysis reaction vessel 400 may include, in its inside, a hydrolysis catalyst that further facilitate the hydrolysis reaction. The hydrolysis reaction vessel 400 supplies, through the processed gas line 23, the high-temperature processed gas mixed with ammonia to the NOx removal catalyst 30.

The processed gas line 23 is merged into the exhaust gas line 21 at a location upstream of the NOx removal catalyst 30. Thus, the processed gas from the hydrolysis reaction vessel 400 is mixed with the exhaust gas before being introduced into the NOx removal catalyst 30. The processed gas containing ammonia is mixed with the exhaust gas, and a resultant gas passes through the NOx removal catalyst 30. Consequently, a NOx removal treatment is carried out on the exhaust gas. The exhaust gas thus purified is discharged from the NOx removal catalyst 30 through the discharge line 24.

The control device 600 is a central device for executing a characteristic operation of the hydrolysis system 10 in accordance with Embodiment 1. Fig. 2 is a block diagram illustrating the control device 600 included in the hydrolysis system 10 in accordance with Embodiment 1. The control device 600 includes a urea water supply amount detecting part 610, a gas flow rate calculating part 620, and a fan control part 630. Operation to be carried out by each functional block will be described later.

### <Operation of hydrolysis system>

The following description will discuss, with reference to Figs. 1 and 2, operation of the hydrolysis system 10.

An amount of a nitrogen oxide in an exhaust gas flowing from the engine into the NOx removal catalyst 30 through the exhaust gas line 21 can be expressed by a product of a flow rate of the exhaust gas and a concentration of the nitrogen oxide in the exhaust gas, both of which vary depending on the operating condition of the engine. In accordance with an amount of a nitrogen oxide to be processed by the NOx removal catalyst 30, an amount of ammonia to be supplied from the hydrolysis reaction vessel 400 varies. For this, a flow rate of urea water to be supplied to the hydrolysis reaction vessel 400 by the pump 500 is controlled.

Thus, the flow rate of the urea water supplied to the hydrolysis reaction vessel 400 varies depending on the operating condition of the engine. Such a control of the amount of the urea water to be supplied (i.e., urea water supply amount) in accordance with the amount of the nitrogen oxide in the exhaust gas depending on the operating condition of the engine can be executed by a known technique. For example, an engine control module that controls running of the engine estimates an amount of a nitrogen oxide and executes the control of the urea water supply amount. Alternatively, a nitrogen oxide concentration sensor (NOₓ sensor) may be provided to the discharge line 24, and feedback control of the urea water supply amount may be executed in accordance with the concentration of the nitrogen oxide indicated by the nitrogen oxide concentration sensor.

A urea water flow rate signal, which is a signal corresponding to the urea water supply amount, is input to the urea water supply amount detecting part 610 of the control device 600. The urea water flow rate signal may be a signal for controlling the pump 500 or a signal output by the pump 500 itself. The urea water supply amount detecting part 610 calculates the urea water supply amount on the basis of the urea water flow rate signal.

Next, in accordance with the urea water supply amount calculated by the urea water supply amount detecting part 610, the gas flow rate calculating part 620 calculates the flow rate of the gas stream to be supplied to the hydrolysis reaction vessel 400 by the first fan 100.

In the hydrolysis reaction vessel 400, if the flow rate of the supplied high-temperature gas stream relative to the urea water supply amount decreases, the temperature of the gas stream drops. Then, the urea water is not sufficiently hydrolyzed in the hydrolysis reaction vessel 400. In order to avoid this, the gas flow rate calculating part 620 calculates the flow rate of the supplied gas stream so that the flow rate of the supplied gas stream increases as the urea water supply amount increases. Typically, the gas flow rate calculating part 620 calculates the flow rate of the supplied gas stream so that the flow rate of the supplied gas stream is proportional to the urea water supply amount.

Further, in accordance with the flow rate of the supplied gas stream thus calculated by the gas flow rate calculating part 620, the fan control part 630 controls operation of the first fan 100 so as to change the amount of the gas stream to be supplied by the first fan 100. As a result of the control carried out by the fan control part 630, the first fan 100 supplies, at the flow rate thus calculated, the gas stream to the hydrolysis reaction vessel 400 through the burner unit 200.

### <Effects>

With the hydrolysis system 10 in accordance with Embodiment 1, an amount of an extraction gas to be supplied to the hydrolysis reaction vessel 400 is controlled in accordance with an amount of urea water supplied to the hydrolysis reaction vessel 400. This can suppress the phenomenon that if an amount of urea water to be supplied (sprayed) becomes excessive relative to a supply of a gas in the hydrolysis reaction vessel 400, the temperature of a gas stream therein drops and consequently ammonia is not supplied sufficiently.

If the supply of ammonia to the NOx removal catalyst 30 of the NOx removal system 1 becomes insufficient, the NOx removal treatment on the exhaust gas cannot be carried out sufficiently. This increases a concentration of a nitrogen oxide in the exhaust gas discharged through the NOx removal catalyst 30, thereby making it impossible to maintain the concentration not more than a specified value. Meanwhile, with the hydrolysis system 10, it is possible to suppress occurrence of such a situation.

If a supply (spraying) of urea water becomes significantly excessive relative to a supply of a gas in the hydrolysis reaction vessel 400, urea may be deposited and adhered onto a wall inside the hydrolysis reaction vessel 400 and/or a surface of the hydrolysis catalyst. This may cause a trouble of clogging of the hydrolysis reaction vessel 400. Meanwhile, with the hydrolysis system 10, it is possible to suppress occurrence of such a trouble.

### Variation

The following description will discuss another embodiment of the present invention. For convenience of description, a member having a function identical to that of a member discussed in the embodiments above is given an identical reference sign, and a description thereof is omitted.

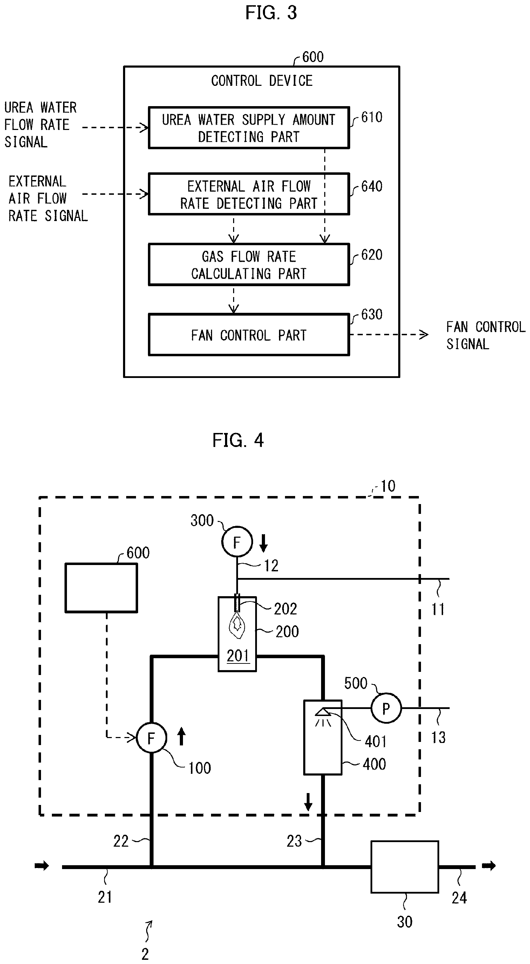

The present variation is a variation of Embodiment 1. Although the present variation slightly differs from Embodiment 1 in terms of the configuration of the control device 600, the present variation is identical to Embodiment 1 in terms of other configurations including the configuration of the hydrolysis system 10. Fig. 3 is a block diagram illustrating a control device 600 in accordance with the variation. In the variation, the control device 600 includes an external air flow rate detecting part 640 in addition to a urea water supply amount detecting part 610, a gas flow rate calculating part 620, and a fan control part 630.

The external air flow rate detecting part 640 monitors an external air flow rate signal from a second fan 300, and calculates a flow rate of external air to be supplied to a burner unit 200 by the second fan 300. In the variation, in accordance with a urea water supply amount calculated by the urea water supply amount detecting part 610, the gas flow rate calculating part 620 calculates a flow rate of a gas stream to be supplied to a hydrolysis reaction vessel 400 by a first fan 100.

The gas flow rate calculating part 620 carries out the calculation so that a sum of the flow rate of the gas stream to be supplied to the hydrolysis reaction vessel 400 by the first fan 100 and a flow rate of air taken by the second fan 300 increases as the urea water supply amount increases. Typically, the gas flow rate calculating part 620 calculates the flow rate of the gas stream to be supplied to the hydrolysis reaction vessel 400 by the first fan 100 so that the sum of the above flow rates is proportional to the urea water supply amount.

Further, in accordance with the flow rate of the supplied gas stream thus calculated by the gas flow rate calculating part 620, the fan control part 630 controls operation of the first fan 100 so as to change the amount of the gas stream to be supplied by the first fan 100. As a result of the control carried out by the fan control part 630, the first fan 100 supplies, at the flow rate thus calculated, the gas stream to the hydrolysis reaction vessel 400 through the burner unit 200.

As described above, in the hydrolysis system 10, the flow rate of the air taken for use in combustion carried out by the burner unit 200 is generally smaller than an amount of an extraction gas taken by the first fan 100. Therefore, it is sufficient to control, as in Embodiment 1, the amount of the extraction gas taken by the first fan 100 so as to be in proportion to the urea water supply amount. However, it is preferable to more accurately control, as in the variation, the amount of the extraction gas taken by the first fan 100 also in consideration of the amount of the air taken by the second fan 300, which amount is a portion of the amount of the gas to be supplied to the hydrolysis reaction vessel 400.

### Embodiment 2

A hydrolysis system 10 in accordance with Embodiment 2 is similar to Embodiment 1 or the variation of Embodiment 1. Embodiment 2 differs from Embodiment 1 shown in Fig. 1 in terms of the position where the first fan 100 of the hydrolysis system 10 takes an extraction gas. A configuration and operation of a control device 600 in Embodiment 2 are similar to those of the control device shown in Fig. 2 or 3.

Fig. 4 is a view schematically illustrating a configuration of a NOx removal system 2 in accordance with Embodiment 2. As shown in Fig. 4, in Embodiment 2, a gas extraction line 22 is branched off from an exhaust gas line 21. The gas extraction line 22 is branched off from the exhaust gas line 2 1 at a location upstream of a location where a processed gas line 23 extending from a hydrolysis reaction vessel 400 is merged into the exhaust gas line 21. Thus, in Embodiment 2, a portion of an exhaust gas having not been subjected to a NOx removal treatment by a NOx removal catalyst 30 is taken. Also with Embodiment 2, it is possible to obtain effects similar to those given by Embodiment 1 or the variation of Embodiment 1.

### Software Implementation Example

Control blocks of the control device 600 (particularly, the urea water supply amount detecting part 610, the gas flow rate calculating part 620, the fan control part 630, and the external air flow rate detecting part 640) can be realized by a logic circuit (hardware) provided in an integrated circuit (IC chip) or the like or can be alternatively realized by software.

In the latter case, the control device 600 includes a computer that executes instructions of a program that is software realizing the foregoing functions. The computer, for example, includes at least one processor and at least one computer-readable storage medium storing the program.

An object of the present invention can be achieved by the processor of the computer reading and executing the program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit.

The computer may further include a random access memory (RAM) or the like in which the program is loaded. Further, the program may be made available to the computer via any transmission medium (such as a communication network and a broadcast wave) which allows the program to be transmitted. Note that an aspect of the present invention can also be achieved in the form of a computer data signal in which the program is embodied via electronic transmission and which is embedded in a carrier wave.

Aspects of the present invention can also be expressed as follows:
A hydrolysis system in accordance with a first aspect of the present invention includes: a hydrolysis reaction vessel in which urea water is sprayed to a gas stream to generate ammonia; a first fan that supplies the gas stream to the hydrolysis reaction vessel; and a control device that controls the first fan so as to change, in accordance with an amount of the urea water supplied to the hydrolysis reaction vessel, a supplied amount of the gas stream.

A hydrolysis system in accordance with a second aspect of the present invention may be configured such that, in the first aspect, the hydrolysis system further includes: a burner unit provided between the first fan and the hydrolysis reaction vessel, the burner unit heating the gas stream.

A hydrolysis system in accordance with a third aspect of the present invention may be configured such that, in the second aspect, the hydrolysis system further includes: a second fan that takes air used to burn a fuel in the burner unit.

A hydrolysis system in accordance with a fourth aspect of the present invention may be configured such that, in any of the first to third aspects, the control device changes a supplied amount of the gas stream so that the supplied amount of the gas stream is proportional to the supplied amount of the urea water.

A hydrolysis system in accordance with a fifth aspect of the present invention may be configured such that, in the third aspect, the control device changes the supplied amount of the gas stream so that a sum of the supplied amount of the gas stream and a taken amount of the air is proportional to the supplied amount of the urea water.

A NOx removal system in accordance with a sixth aspect of the present invention includes: a hydrolysis system described in any of the first to fifth aspects; and a NOx removal catalyst that carries out a NOx removal treatment on an exhaust gas from an engine, wherein the first fan extracts a portion of a gas discharged from the NOx removal system, and a processed gas from the hydrolysis reaction vessel is mixed with the exhaust gas to yield a mixture gas, and the mixture gas is introduced into the NOx removal catalyst.

A NOx removal system in accordance with a seventh aspect of the present invention includes: a hydrolysis system described in any of the first to fifth aspects; and a NOx removal catalyst that carries out a NOx removal treatment on an exhaust gas from an engine, wherein the first fan extracts a portion of the exhaust gas from the engine, and a processed gas from the hydrolysis reaction vessel is mixed with the exhaust gas to yield a mixture gas, and the mixture gas is introduced into the NOx removal catalyst.

A method in accordance with an eighth aspect of the present invention for controlling a hydrolysis system is a method for controlling a hydrolysis system which includes (i) a hydrolysis reaction vessel in which urea water is sprayed to a gas stream to generate ammonia and (ii) a first fan that supplies the gas stream to the hydrolysis reaction vessel, the method including: controlling the first fan so as to change, in accordance with an amount of the urea water supplied to the hydrolysis reaction vessel, a supplied amount of the gas stream.

### Supplementary note

The present invention is not limited to the embodiments, but can be altered by a skilled person in the art within the scope of the claims. The present invention also encompasses, in its technical scope, any embodiment derived by combining technical means disclosed in differing embodiments. For example, either of the control devices 600 shown in Figs. 2 and 3 is applicable to the hydrolysis system 10 in accordance with Embodiment 2.

In the examples shown in the foregoing embodiments, the first fan 100 extracts, from the discharge line 24, a portion of an exhaust gas having been subjected to a NOx removal treatment or the first fan 100 extracts, from the exhaust gas line 21, a portion of an exhaust gas from the engine. However, the gas to be taken by the first fan 100 is not limited to these examples, and may alternatively be air (external air).

The urea water flow rate signal to be obtained by the urea water supply amount detecting part 610 may be a signal from a flow rate sensor provided to the supply line 13. The external air flow rate signal to be obtained by the external air flow rate detecting part 640 may be a signal from a flow rate sensor provided to the external air line 12.

In order to change the flow rate of the gas to be supplied to the hydrolysis reaction vessel 400 by the first fan 100, the fan control part 630 may control operation of the first fan 100 in accordance with a characteristic(s) specific to the first fan 100 (feedforward control). Alternatively, feedback control may be carried out in accordance with a signal from a flow rate sensor provided to the gas extraction line 22.

### Reference Signs List

1, 2: NOx removal system
10: Hydrolysis system
100: First fan
200: Burner unit
201: Combustion chamber
202: Burner
300: Second fan
400: Hydrolysis reaction vessel
401: Nozzle
500: Pump
600: Control device
610: Urea water supply amount detecting part
620: Gas flow rate calculating part
630: Fan control part
640: External air flow rate detecting part
30: NOx removal catalyst
11: Fuel line
12: External air line
13: Supply line
21: Exhaust gas line
22: Gas extraction line
23: Processed gas line
24: Discharge line

## Claims

1. A hydrolysis system comprising:
a hydrolysis reaction vessel in which urea water is sprayed to a gas stream to generate ammonia;
a first fan that supplies the gas stream to the hydrolysis reaction vessel; and
a control device that controls the first fan so as to change, in accordance with an amount of the urea water supplied to the hydrolysis reaction vessel, a supplied amount of the gas stream.

2. The hydrolysis system as set forth in claim 1, further comprising:
a burner unit provided between the first fan and the hydrolysis reaction vessel, the burner unit heating the gas stream.

3. The hydrolysis system as set forth in claim 2, further comprising:
a second fan that takes air used to burn a fuel in the burner unit.

4. The hydrolysis system as set forth in any one of claims 1 to 3, wherein
the control device changes a supplied amount of the gas stream so that the supplied amount of the gas stream is proportional to the supplied amount of the urea water.

5. The hydrolysis system as set forth in claim 3, wherein
the control device changes the supplied amount of the gas stream so that a sum of the supplied amount of the gas stream and a taken amount of the air is proportional to the supplied amount of the urea water.

6. A NOx removal system comprising:
a hydrolysis system recited in any one of claims 1 to 5; and
a NOx removal catalyst that carries out a NOx removal treatment on an exhaust gas from an engine, wherein
the first fan extracts a portion of a gas discharged from the NOx removal system, and
a processed gas from the hydrolysis reaction vessel is mixed with the exhaust gas to yield a mixture gas, and the mixture gas is introduced into the NOx removal catalyst.

7. A NOx removal system comprising:
a hydrolysis system recited in any one of claims 1 to 5; and
a NOx removal catalyst that carries out a NOx removal treatment on an exhaust gas from an engine, wherein
the first fan extracts a portion of the exhaust gas from the engine, and
a processed gas from the hydrolysis reaction vessel is mixed with the exhaust gas to yield a mixture gas, and the mixture gas is introduced into the NOx removal catalyst.

8. A method for controlling a hydrolysis system which includes (i) a hydrolysis reaction vessel in which urea water is sprayed to a gas stream to generate ammonia and (ii) a first fan that supplies the gas stream to the hydrolysis reaction vessel, said method comprising:
controlling the first fan so as to change, in accordance with an amount of the urea water supplied to the hydrolysis reaction vessel, a supplied amount of the gas stream.
